# EUROPEAN PATENT APPLICATION

(11) **EP 4 701 266 A1**
(43) Date of publication of application: **25.02.2026**
(21) Application number: 25197394.7
(22) Date of filing: 21.08.2025
(51) Int. Cl.: H04W 36/00, H04W 36/14, H04W 36/36

(54) **HANDOVERS BETWEEN NODES USING DIFFERENT RADIO ACCESS TECHNOLOGIES**

(30) Priority: 23.08.2024 GB 202412434
(71) Applicant: Nokia Technologies Oy, 02610 Espoo (FI)
(72) Inventor: HENTTONEN, Tero, 02760, Espoo (FI); TOSKALA, Antti Anton, 02180 Espoo (FI)
(74) Representative: Script Intellectual Property LLP

(57) **Abstract**

An apparatus, configured to operate in a mode such that the apparatus is communicating with a first and second node using different radio access technologies RAT. The apparatus being configured to respond to receipt of conditional handover information from the first node, the conditional handover information comprising configuration information for the second node and a core network indication indicating whether the first and second node provide access to a same, a compatible or an incompatible core network; to determine whether at least one handover condition is fulfilled; and where so to generate a handover confirmation report comprising an indication of the at least one handover condition that was determined to be fulfilled; to transmit the report to the second node; and to perform a handover such that the apparatus is no longer connected to the first node and the apparatus is connected to the second node.

## Description

### TECHNOLOGICAL FIELD

Various example embodiments relate to mobile communication network and in particular embodiments to performing handovers between nodes that operate using different radio access technologies RAT.

### BACKGROUND

Inter-RAT handovers may result in a lack of continuity in terms of user plane data. That is, the core network routing is updated but data loss may occur during the creation of a new UE context in the target RAT as using the UE context of previous source RAT is not possible.

### BRIEF SUMMARY

The scope of protection sought for various example embodiments of the disclosure is set out by the independent claims. The example embodiments and features, if any, described in this specification that do not fall under the scope of the independent claims are to be interpreted as examples useful for understanding various embodiments of the invention.

According to various, but not necessarily all, example embodiments of the disclosure there is provided an apparatus, comprising: at least one processor; and at least one memory storing instructions that when executed by the at least one processor cause the apparatus at least to: operate in a mode such that said apparatus is communicating with a first and second node using different radio access technologies RAT; in response to receipt of conditional handover information from said first node, said conditional handover information comprising configuration information for said second node and a core network indication as to whether said first and second node provide access to one of the following: a same core network, or different core networks that are compatible with each other, or different core networks that are incompatible with each other; determining whether at least one handover condition is fulfilled; and when so initiating a handover process by: generating a handover confirmation report comprising an indication of said at least one handover condition that was determined to be fulfilled; transmitting said report to said second node; and performing said handover such that said apparatus is no longer connected to said first node and said apparatus is connected to said second node.

It was recognised that where an apparatus such as a user equipment is connected concurrently to two network nodes that operate using different radio access technologies, then when the apparatus moves out of the radio coverage of one of the cells of one of the nodes, a conditional handover to connect solely to the other node may be an efficient way of performing the handover and such a handover may be performed without or with very little loss of data and without or with at least reduced interruption by providing configuration information to the user equipment ahead of the handover, along with an indication of the compatibility or otherwise of the core network. The compatibility of the core network determines whether certain configurations can be re-used, derived or whether they need to be generated afresh. A compatible core network is one where many of the architectural aspects, configuration and functions are the same or similar, which allows user plane data continuity during handovers so that data packets can be kept rather than discarded, and security key derivation for moving from one RAT to another can be defined and signalled. It was also recognised that the conditions that triggered the handover are known to the apparatus and not the network and that sending this information in a handover confirmation report may enable the process to be improved.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates the principle of conditional handover from UE 6G-5G dual conductivity to 5G conductivity according to an example embodiment;
Fig. 2 illustrates a signalling flow diagram for inter RAT conditional handover according to an embodiment;
Fig. 3 schematically shows a user equipment within a network according to an embodiment;
Fig.4 shows a flow diagram schematically illustrating steps in a method performed at a user equipment according to an embodiment;
Fig.5 shows a flow diagram schematically illustrating steps in a method performed at a 6G node according to an embodiment; and
Fig.6 shows a flow diagram schematically illustrating steps in a method performed at a 5G node according to an embodiment;

### DETAILED DESCRIPTION

Before discussing the example embodiments in any more detail, first an overview will be provided.

Embodiments propose to use the Conditional Handover (CHO) principle for an inter-system handover to switch between RATS, such as from 6G-5G dual connectivity operation to 5G only operation.

The conditional handover was introduced in 3GPP Release 16 specifications (for both intra-LTE and intra-NR cases). It was introduced mainly to improve the reliability of the handover procedure (since the HO command itself can be sent in good radio conditions, while the HO triggering often happens when radio conditions toward the current source cell are less reliable). It can also reduce the interruption time for intra-system handovers due to avoiding the extra steps in the HO process.

Multi-RAT Spectrum Sharing (MRSS) has been discussed as an enabler for 6G deployments where the same site is shared by both 5G and 6G cells (potentially on a HW level so that the same "cell" actually handles both 5G and 6G transmission and reception). This allows operators to deploy 6G and 5G on the same band.

Embodiments seek to allow preparations for the handover to be performed in advance. In the dual connectivity case embodiments take advantage of the fact that the connection between user equipment UE and network NW for the target node is already established since the UE is anyway operating already on the new 5G target carrier as the secondary cell, while the anchor is on the 6G carrier. The handover occurs where the 6G signal becomes weak and thus, the UE hands over to the 5G cell and this becomes the anchor cell.

The user equipment may be any mobile end or terminal device that may be capable of wireless communication. By way of example rather than limitation, user equipment UE may also be referred to as a communication device, a terminal device, a Mobile Station (MS). The user equipment may include, but is not limited to, a mobile phone, a cellular phone, a smart phone, a tablet, a wearable terminal device, a personal digital assistant (PDA) , vehicle-mounted wireless terminal devices, smart devices etc.

While embodiments address the multi-RAT dual connectivity case, they are also applicable for a multi-SIM (subscriber identity module) case where a UE is connected to both e.g. 5G and 6G simultaneously. In these cases also, if the 6G becomes weak and the 5G connection is available, the UE can switch to using that connection if allowed by the multiple MUSIM configuration (e.g. network configures the switch and both 5G and 6G are using the same operator).

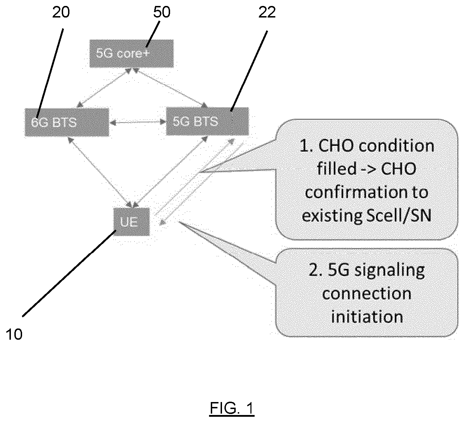

Fig. 1 shows how a UE 10 is operating under dual connectivity and is connected to both a 5G base transceiver station BTS 20 and a 6G BTS 22 to increase data rate. The core network 50 is the same for the two BTS 20, 22 in this embodiment and the 6G node 20 is the anchor and master node and thus, controls any handover, the 5G BTS 22 being the secondary node. The master node 20 configures the UE with conditional handover configuration CHO for handing over to 5G only operation.

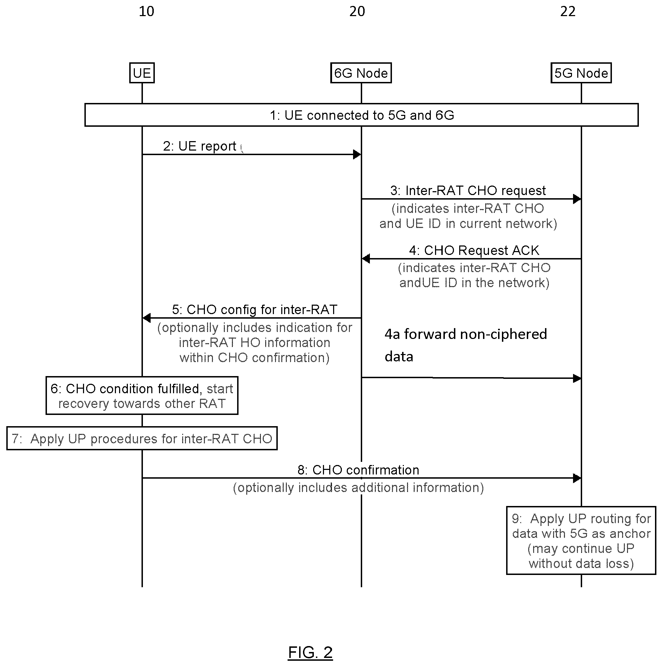

The UE 10 will then determine if the CHO condition is fulfilled and if so this leads to the generation and transmission of a CHO confirmation message to the 5G BTS 20 which is the current secondary node providing radio coverage in the secondary cell for the UE 10. In response 5G node 20 will transmit 5G signalling connection initiation. The 5G 22 and 6G 20 BTS will have exchanged information previously regarding the UE configuration and security keys. This signalling is shown in more detail in Fig. 2.

Fig. 2 shows an example signalling diagram between a UE 10 and 5G and 6G nodes 22, 20 during a CHO. Two embodiments are disclosed below. In one embodiment, the UE switches from a dual connectivity state where the UE is concurrently connected to the 5G and 6G nodes, the 6G node being the anchor node, to a state where the UE is only connected to the 5G node such that the 5G node then needs to switch to act as the anchor node. In a further embodiment, UE 10 is a multi-SIM UE and one SIM provides the connection to the 5G node and the other to the 6G node. Where the 6G node signal becomes weak, and the UE 10 can no longer reliably connect to the 6G cell, then it performs a handover to only connect to the 5G cell.

### Dual connectivity embodiment:

1) The master node 20 for the 6G-5G dual connectivity (or for aggregation in general) embodiment configures the UE with CHO configuration for the 5G-only operation. The configuration may also indicate whether the CN is the same (or compatible) for both RATs.
2) the UE may send a report to the 6G node (master node) 20 indicating it is connected to both nodes, or in this embodiment no report may be sent as the nodes are aware of this.
3) The 6G node 20 then transmits an Inter-RAT CHO request indicating that inter-RAT handover is to be supported for the UE identified by a UE ID in the request. The 6G node 20 also sends information about the UE security keys. This may include information about how to derive the security keys.
4) The 5G node (secondary node) 22 responds with an ack indicating whether inter RAT CHO to 5G is allowed for that identified UE. It may also transmit information about the security keys such as how to derive the key from a root key and it may transmit an indication of an identifier for the UE when communicating with the 5G node 22. Where the 5G and 6G nodes are not co-located it may send an indication that timing advance needs to be acquired, or an indication of a value to apply for said timing advance. Where they are co-located then it may send an indication indicating that the TA and sync information can be retained and re-used.
5) The 6G node 20 responds by sending a CHO configuration message for inter-RAT handover to the UE. This includes an indication as to whether the core network is the same for the two nodes, or different in which case the indication may further indicate whether the different core networks are compatible or incompatible for the two nodes. The CHO configuration message may include an indication as to whether the UE should retain or discard at least part of the stored data within the protocol stacks, it may also provide the security key derivation information allowing the UE to derive security keys for communicating with the 5G node when it becomes the anchor node. Whether or not the UE should retain or discard at least part of the stored data within the protocol stacks and whether it can derive security keys from information received in the CHO configuration message will depend on the core network being the same or compatible. One or more indications may be sent to the user equipment indicative of whether the core network is compatible or incompatible and indicative of the user equipment's behaviour during the handover procedure that depends on this. For example, the behaviour relating to the protocol stacks may be directly indicated or determined by the UE in dependence upon an indication regarding the core network's compatibility.
6) The CHO triggers when one or more of the following is determined at the UE to be met (based on network configuration see step 1):
   - The UE is considered having lost the synch with 6G carrier, e.g. maximum number of radio link control RLC retransmissions is triggered for uplink UL control plane signalling (which means UE fails to provide control plane signalling anymore to the 6G base station and would typically trigger RLF radio link failure for the UE)
   - The measured 6G signal is below a configured threshold (A2-like event), optionally over a period of time (i.e. TTT time to trigger period or N measurements)
   - The packet error rate (in L1 or L2) is over a threshold over a configured observation window (e.g. X ms window with Y% packet error rate); and in some embodiments: the UE will also perform at least one of:
      check the UP RLC retransmissions - if max retransmissions have not been reached there, do next action, otherwise trigger CHO
      Do additional control plane CP or user plane UP transmissions to check the link status (e.g. L1 transmission with uplink dummy data for the TB transmit buffer, BSR/PHR or other MAC CE, ) and only then performs CHO

When the UE determines that the one or more CHO conditions are fulfilled the UE executes the CHO towards the target RAT. If the CHO request indicated that the CN is the same or compatible for both RATs, the UE shall derive new security keys for the target RAT from the information received from the 6G node in the CHO configuration message and will trigger retransmission of all PDCP (packet data convergence protocol) SDUs (service data units) in the buffer, such that there is no loss of data continuity in the user plane. If the core network is indicated to be different and incompatible for user plane data continuity, then the UE will derive new security keys based on the target RAT key derivation rules and will discard the PDCP SDUs in the buffer.

In some embodiments, the UE may slow down handovers depending on how mobility has worked before, e.g. if UE has been doing many ping-pongs it doesn't trigger as quickly. It may do this by updating some of the threshold values that trigger CHO to more demanding values, or by requiring more than one threshold to trigger CHO.
7) the UE will apply user plane procedures for inter-RAT CHO

At some point following step 4 and before step 8, step signalling step 4a will occur where the 6G node source node 20 forwards buffered data that has not been acknowledged as having been received to the 5G node 22. This is forwarded as non-ciphered PDCP packets.
8) The UE will transmit the CHO confirmation to the 5G node 22 indicating it is no longer connected to 6G node 20. The message may also include the UE identity. In some embodiments, the message may further comprise UP routing information to allow the RAN to avoid data loss for example by utilizing data forwarding according to the provided UP routing information. And in some cases the triggering condition for the CHO (to allow source/target RAN to determine the reason for the CHO triggering e.g. in case there are multiple conditions). The UE may also indicate whether it adjusted the CHO condition and how.

Upon receiving the CHO execution confirmation from the UE, the network will take appropriate actions to re-route the user plane to the new RAT connection.

In the case that the core is the same evolved 5G core, the update on the data routing can be fast also. Thus, such a handover execution time can be very fast with short interruption in data flow.

### Dual SIM embodiment

1) The UE is connected to both a 5G node via one SIM and a 6G node via another. The UE is configured with CHO configuration for the 5G-only operation. The configuration may also indicate whether the CN is the same (or compatible) for both RATs.
2) the UE sends a report to the 6G node 20, indicating that it is connected to both a 5G and a 6G node.
3) The 6G node 20 then transmits an Inter-RAT CHO request indicating that inter-RAT handover is to be supported for the UE identified by the UE ID. The 6G node 20 also sends information about the UE security keys. This may include information about the 6G SIM number that is used to derive the security key.
4) The 5G node responds with an ACK indicating inter RAT CHO to 5G is fine for that identified UE. It may also transmit information about the security keys such as how to derive the key from the security key and it may transmit an indication of the UE identifier for communication with the 5G node. Where the 5G and 6G nodes are not co-located it may send updated sync and timing advance TA information for the 5G node.
5) the 6G node 20 responds to the CHO configuration required for inter-RAT handover. This may optionally include an indication for inter-RAT HO information that should be included within the CHO confirmation message. The CHO configuration may include an indication as to whether the UE should retain or discard at least part of the stored data within the protocol stacks, it also provides the security key derivation information allowing the UE to derive security keys for communicating with the 5G node.
6) The CHO triggers when one or more conditions are met as for the dual connectivity case.

When the UE determines the one or more CHO conditions are fulfilled the UE executes the CHO towards the target RAT. If the CHO indicated that the CN is the same or compatible for both RATs, the UE shall derive new security keys for the target RAT from the information received and will trigger retransmission of all PDCP (packet data convergence protocol) SDU (service data unit) in the buffer, such that there is no loss of data and continuity in the user plane. If the core network is indicated to be different and incompatible then the UE will derive new security keys based on the target RAT key derivation rules and will discard the PDCP SDUs in the buffer.

In some embodiments, the UE may slow down handovers depending on how mobility has worked before, e.g. if UE has been doing many ping-pongs it doesn't trigger as quickly. It may do this by updating some of the threshold values that trigger CHO according to more demanding signal quality values, or by requiring more than one threshold to trigger CHO.
7) the UE will apply user plane procedures for inter-RAT CHO, which means mapping the data flows is now active.

At some point following step 4 and before step 8, signalling step 4a will occur where the source node 20 forwards (UL/DL uplink/downlink) buffered data that has not been acknowledged as having been received to the target node 22. This is forwarded as non-ciphered PDCP packets.
8) The UE will transmit the CHO confirmation to the 5G node 22 indicating it is no longer connected to node 20. The message may also include the UE identity. In some embodiments, the message may further comprise UP user plane routing information to allow the RAN radio access network, to avoid data loss for example by utilizing data forwarding according to the provided UP routing information. And in some cases the triggering condition for the CHO (to allow source/target RAN to determine the reason for the CHO triggering e.g. in case there are multiple conditions). The UE may also indicate whether it adjusted the CHO condition and how.
9) Upon receiving the CHO execution confirmation from the UE, the 5G node will apply user plane routing.

The network will take appropriate actions to re-route the user plane to the new RAT connection. In this regard the target 5G node 22 may request a path switch from the AMF in the core network and the AMF may send "end marker" packet to the source 6G node 22 to indicate last data sent to source cell. The AMF acknowledges path switch and reroutes data to cell of 5G node (i.e. UPF user plane function will send all data to target cell from now on).

In the case the core is the same evolved 5G core or a compatible core network, the update on the data routing can be fast. Thus, such a handover execution time can be very fast with short interruption in data flow.

### Security key derivation

As noted above, where the core network is the same or compatible then the security keys can be derived from the previous security keys and information allowing this to happen is provided firstly in message 3, the inter-RAT CHO request from the 6G node 20 to the 5G node 22, where it is indicated that the security keys should be re-used and in message 4 the CHO request ack from the 5G node 22 to the 6G node where information about how to derive the keys from the current keys may be provided. This information is then transmitted to the user equipment 10 at message 5 in the CHO configuration for inter-RAT handover message.

The derivation of the security key when the core network is compatible or the same may follow procedures outlined below. These are based on procedures that are used for handover where the RAT does not change and the cells and UE can derive the keys from the previous keys. Generally when an inter-RAT handover occurs and the RAT changes the key derivation of the security keys goes all the way back to the original USIM keys and in effect the UE and target cell(s) generate security keys again from scratch. Embodiments recognise that where the core network is compatible or the same, then security keys can be derived from previous keys allowing signalling of this information between the nodes and the UE and allowing user plane data continuity and reducing any interruption times.

Looking at how security keys are derived when a UE is connected to a serving cell, it derives "per-cell" security key (i.e. K_{NG-RAN}, which form the basis for all other keys for UE in that cell from an AMF-only key (K_{AMF}) for that cell using a "NH" (next-hop) key. This means there is a "root key" (i.e. K_{gNB} derived from K_{AMF} using NH key value) that is used for deriving those, which is based on information stored in the SIM card.

When a cell changes for a handover where the RAT remains the same (i.e. RAT does not change), there are generally two choices for derivation of the security keys for the UE:
a. The "root key" (i.e. K_{GNB}) is changed with a new NH key, which means also the "per-cell" security key (i.e. K_{NG-RAN}) also changes (and any keys derived from K_{NG-RAN} such as CP and UP keys also change). This is told to the UE by the target cell asking UE to derive the new key, which also the target cell does according to the same key derivation algorithm.
b. The "per-cell" UE security keys (i.e. K_{UPenc}, K_{UPint}, K_{RRCint}, K_{RRCenc}) are re-derived from the root key using an NCC value (i.e. a counter value that is added to the key derivation algorithm), which doesn't affect the "root key" but creates new per-cell keys for the UE. This is told to UE by providing the new NCC value.

Where the RAT changes, then conventionally for such inter-RAT HO the key derivation goes all the way back to the USIM keys, i.e. the UE redoes the entire key derivation process from the beginning similar to connection setup. Embodiments propose reuse of the NH/NCC-based key derivation instead, which allows user plane data continuity by applying data forwarding at the same time. This is not conventionally done in inter-RAT HO because the UP architecture in different RATs is so different that it would be too difficult, and the key derivation and/or key hierarchy is often different between the RATs. However, it was recognized that where the same or a similar/compatible CN is present in both 5G and 6G, then it becomes possible.

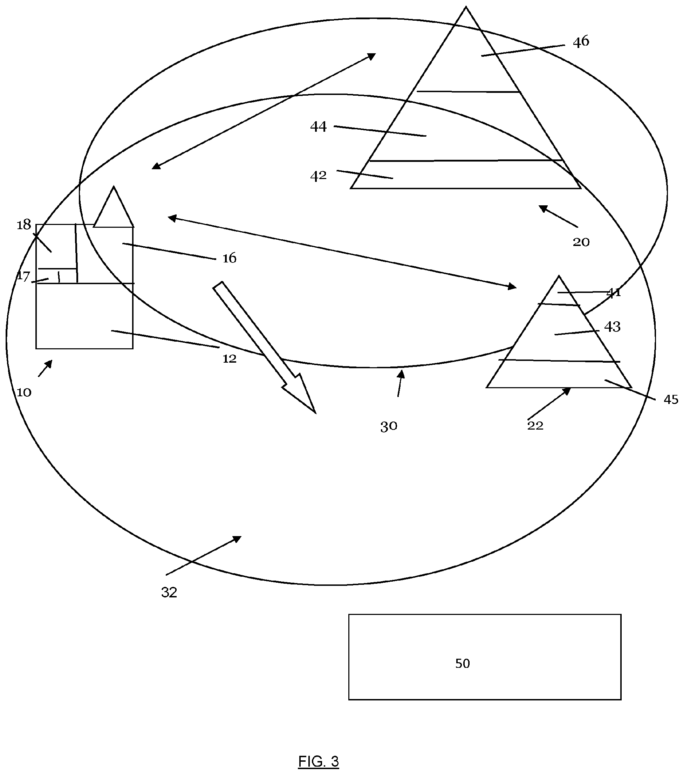

Fig. 3 shows a user equipment 10 according to an embodiment. User equipment 10 comprises a processor 18, a data store 12 for storing data and program code, one or more SIM cards 17 and receiving and transmitting circuitry 16. In this embodiment, the user equipment 10 is connected to both a 6G network node 20 and a 5G network node 22, in a dual connectivity mode such that the 6G node 20 is the anchor node and the 5G node 22 is the secondary node.

The 6G node 20 comprises a data store 42 for storing data and program code, a processor 44 and receiving and transmitting circuitry 46. The 6G network node 20 provides 6G radio coverage within cell 30.

Network node 22 is a 5G network node and comprises a data store 45 a processor 43 for executing computer code stored in the data store 45 and receiving and transmitting circuitry 41. Network node 22 provides radio coverage within a 5G cell 32 which has a larger coverage area than the 6G cell 30. Fig. 3 also schematically shows core network 50 which in this embodiment is the same for both the 5G node 22 and the 6G node 20.

The UE 10 is moving and at some point it will exit the radio coverage provided by the 6G cell 30 and will enter radio coverage provided only by the 5G cell 32. The user equipment 10 is configured to determine from detected radio conditions when a conditional handover should be performed and to handover from the 6G node 20 to the 5G node 22 such that the 5G node becomes the anchor node. The signalling that is performed to arrive at this handover was described with respect to Fig. 2.

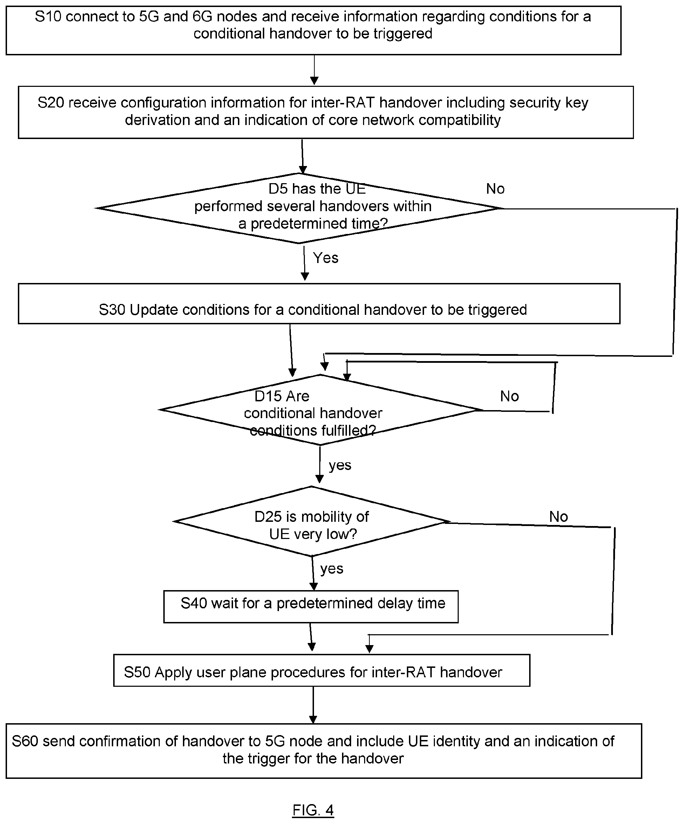

Fig. 4 shows a flow diagram illustrating steps in a method performed at a user equipment according to an embodiment. In an initial step S10 the user equipment is connected to both the 5G and 6G nodes and will receive information regarding conditions for a conditional handover to be triggered from the 6G node.

In some embodiments, where the UE is connected to the nodes in a multi-SIM embodiment as opposed to a dual connectivity embodiment it may transmit an indication to the 6G node to indicate to it that is connected to both the 5G and 6G nodes.

At a step S20 the user equipment receives configuration information for inter RAT handover which includes an indication as to whether the core network is the same or compatible for the two nodes. This indication is determinative of the UE behaviour regarding deriving security keys and retaining or discarding data. The configuration information may include, in some cases as part of providing the core network indication, information explicitly indicating whether to retain or discard at least part of the stored data within the protocol stacks and/or information on how to derive security keys to be used in the target RAT. It is then determined at D5 if the UE has performed several handovers within a predetermined time, in other words has there been a number of ping pongs. If it is determined that there are, then the conditions for conditional handover to be triggered, may be updated to make them more demanding to fulfil and so try to avoid these ping pongs at step S30. If not then it is determined at D15 if the conditional handover conditions are fulfilled. If they are then at D25 it is determined if the mobility of the UE is very low. If it is not then the user plane procedures for the inter- RAT handover are applied at S50. That is at least some of the data in the protocol stacks are retained where configuration information received at step S20 indicates they should be, where for example the core network is indicated as being the same or compatible, or are discarded if they are not.

If the mobility is determined to be very low then prior to performing step S50, step S40 of waiting for a predetermined delay time is performed. This allows the handover to be delayed where it is clear that the detected deteriorating radio conditions are not due to the UE mobility and therefore may not continue to deteriorate. At step S60 confirmation of the handover is sent to the 5G node and this includes the UE identity and an indication of the trigger for the handover and in some cases where the conditions for a conditional handover have been updated an indication of this.

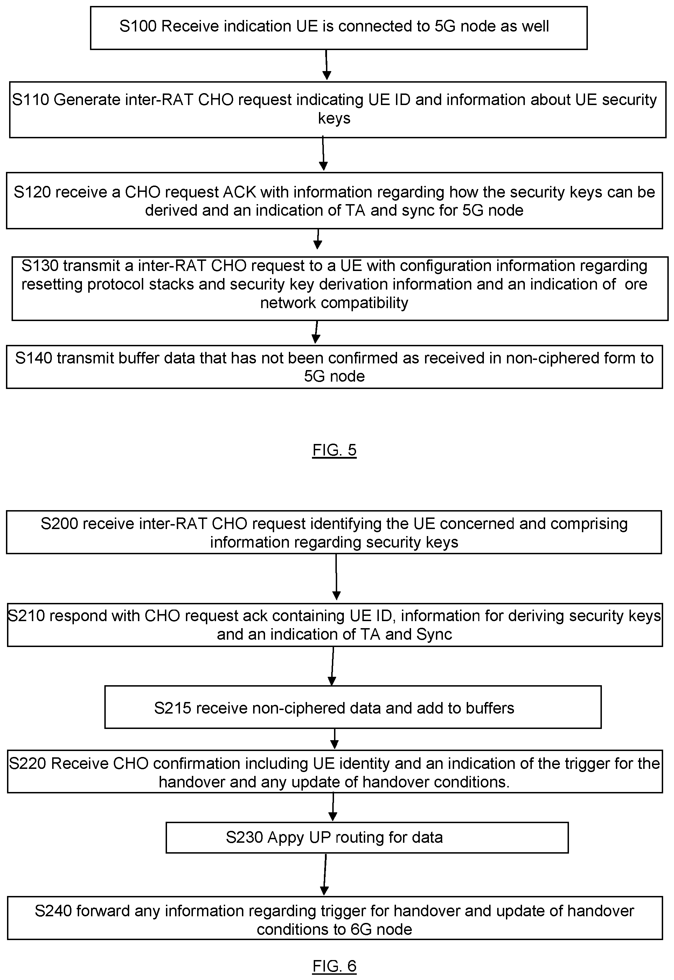

Fig. 5 shows steps in a method performed at the 6G node. At step S100 an indication that UE is also connected to a 5G node may be received. In some cases this may not be received as the 6G node is already aware of this, for example in the dual connectivity case.

At step S110 the 6G node generates an inter-RAT conditional handover request, that identifies the UE concerned and provides information about the UE security keys. At step S120 a conditional handover request acknowledgement is received which includes information regarding how the security keys can be derived and an indication of the timing advance and sync for the 5G node. In this regard, where the 6G node and 5G node are co-located then this may simply be an indication that these do not need to be updated, however where they are not co-located then it may be an indication that timing advance needs to be acquired or an indication of a value to apply for said timing advance.

At step S130 the 6G node transmits an inter-RAT conditional handover request to a user equipment and this request includes one or more of: an indication as to whether the core network is the same compatible or different, configuration information regarding retaining or discarding at least some data in the protocol stacks and information regarding how the security keys can be derived. In this regard, where the user plane configuration is to be retained which is the case where the core network is the same for the two nodes or is compatible then the information indicates that at least some data in the protocol stack should be retained whereas where the core network is different then this data may be discarded.

At step S140 the buffered data within the 6G node either received from or to be sent to the user equipment, that has not been confirmed as received is transmitted in non-ciphered form to the 5G node.

Fig. 6 shows steps in a method performed at a 5G node according to an embodiment. In an initial step S200 the 5G node receives an inter-RAT CHO request which identifies the UE concerned and includes information regarding security keys used by the 6G node for communicating with the user equipment. At step S210 the 5G node responds to the 6G node with an ack and this contains the UE identifier for communicating with the 5G node, and information for deriving security keys and an indication of timing advance TA and synchronisation. In this regard, it may be an indication that TA and sync are to be retained where the 6G and 5G nodes are co-located or it may be an indication that timing advance needs to be acquired or an indication of a value to apply for said timing advance. At step S215 the 5G node receives non-ciphered data from the 6G node and adds it to its buffers.

At step S220 the 5G node receives a conditional handover confirmation message from the user equipment and this includes the user equipment identity and an indication of the trigger for the handover and any update of handover conditions that there may be.

At step S230 it applies the user plane routing for data and at step S240 it may forward any information regarding the trigger for the handover and updates of handover conditions to the 6G node. It will also derive and apply updated security keys in dependence upon configuration information received in said conditional handover request message.

A key advantage with the above embodiments is the very fast execution of the handover and with this approach the 6G connection doesn't need to be dropped in advance in case there is a risk it may become bad as the conditional handover (CHO) allows the UE to move to the 5G node without the need to get the messages going via the 6G connection anymore (as is the case in the regular inter-system handover).

Various aspects and embodiments are described below:
According to various, but not necessarily all, example embodiments of the disclosure there is provided an apparatus, comprising at least one processor; and at least one memory storing instructions that when executed by the at least one processor cause the apparatus at least to: operate in a mode such that said apparatus is communicating with a first and second node using different radio access technologies RAT, in response to receipt of conditional handover information from said first node, said conditional handover information comprising configuration information for said second node and a core network indication indicating whether said first and second nodes provide access to one of the following: a same core network, different core networks that are compatible with each other, or different core networks that are incompatible with each other; determining whether at least one handover condition is fulfilled; and where so performing a handover such that said apparatus is no longer connected to said first node and said apparatus is connected to said second node.

It was recognised that where a user equipment is connected to two network nodes and where it may move out of the radio coverage of one of the cells, then performing a conditional handover to connect solely to the other cell may be made in an efficient way, without or with reduced loss of data and without or with at least reduced interruption by providing configuration information to the user equipment ahead of the handover, along with an indication of the status of the core network as this determines whether certain configurations can be re-used, amended or whether they need to be generated afresh. A compatible core network is one where many of the architectural aspects, configuration and functions are the same or similar, which allows user plane data continuity during handovers so that data packets can be kept rather than discarded, and security key derivation for moving from one RAT to another can be defined and signalled.

In some embodiments, said mode said apparatus is caused to operate in comprises a dual connectivity mode, said first node acting as an anchor node for said apparatus and said second node acting as a secondary node; and following said handover said second node acting as said anchor node for said apparatus.

In other embodiments, said apparatus is configured for operation with a plurality of subscriber identity modules SIMs, a first SIM for communicating with a first radio access technology of said first node and a second SIM for communicating with a second radio access technology of said second node.

In some embodiments where said apparatus is configured to operate with a plurality of SIMs, said apparatus is further caused to: generate a report indicating said apparatus is connected to both said first and second node; and to transmit said report to said first node. Where said apparatus is configured to operate in dual connectivity mode then the first node knows that the apparatus is also connected to the second node and this does not need to be signalled.

In some embodiments, said first node operates at a higher frequency band than said second node. Where the first node operates at a higher frequency than the second node then the radio coverage of the cells of the first node is likely to be less than that of the second node and thus, it is likely that a handover to the second node will be the handover that is required. Thus, such a handover can be planned for in advance by providing configuration information for communicating with the second node to the user equipment in advance of any handover.

In some embodiments, said first node comprises a 6G node and said second node comprises a 5G node. It may be that in dual connectivity for example the 6G node will be the anchor node but the 5G node may provide the larger coverage, thus, the apparatus may move out of coverage of the 6G node and the 5G node will need to become the anchor node.

In some embodiments, said apparatus is caused to: in response to said received core network indication indicating said core network is a same or compatible core network for said first and second nodes, to apply user plane data routing procedures according to said configuration information received within said conditional handover information from said first node.

The indication regarding the core network allows the apparatus to know whether certain user plane data routing procedures may be applied that allow the uppermost data layer and the PDCP layer to be retained rather than needing to discard them. Retaining this data allows for user plane data continuity.

In some embodiments, said apparatus is caused to derive security keys for said second node from said conditional handover information where said core network indication received from said first node indicates said core network to be a same or compatible for said first and second nodes.

Conditional handover CHO information may comprise an indication of the security key, this may be information regarding a root key for dual connectivity case, or information regarding the second SIM for multi- SIM case. Where the core network is the same or compatible for both RATs then this enables the apparatus to be able to derive the keys from this information. If the core network indication indicates the core networks to be incompatible, then the apparatus needs to generate the security keys based on the target RAT key derivation rules.

In some embodiments, in response to said received configuration information indicating said synchronisation information and timing advance are to be re-used, said apparatus is caused to retain said synchronisation and timing advance configuration when performing said handover to said second node.

Where the first and second node are co-located then the synchronisation and timing advance will be the same for both nodes and providing an indication of this to the apparatus prior to the handover enables the apparatus to retain and re-use this information when connecting to the second node.

In some embodiments, said determining whether said at least one handover condition is fulfilled comprises determining at least one of the following: whether uplink control signalling to said first node has triggered more than a predetermined number of retransmissions; whether a measured signal strength of signals from said first node is below a configured threshold value; whether a measured signal from said first node is below a configured threshold for a predetermined time; and whether an error rate in layer 1 or layer 2 signalling to said first node is above a predetermined threshold over a predetermined time.

As the apparatus has been configured to perform a conditional handover, the conditions triggering the handover may be determined at the apparatus. Various indications of radio conditions such as measured signal strengths or signal failures are compared with threshold values and when they pass or equal the threshold value in a way that indicates radio conditions are poor then this may indicate at least one handover conditions is fulfilled and where one handover condition is required to trigger a handover, a handover is triggered. Where more than one is required then a handover is triggered when one or more further conditions are fulfilled.

In some embodiments, said step of performing said handover comprises applying user plane data routing procedures according to said configuration information received within said conditional handover information from said first node.

In some embodiments, said apparatus is further caused to generate a handover confirmation report for transmission to said second node, said handover confirmation report indicating that said apparatus is no longer also connected to said first node and comprising an identifier for said user equipment.

In some embodiments, said apparatus is caused to: generate a handover confirmation report for transmission to said second node, said handover confirmation report comprising an indication of said at least one handover condition that triggered said handover.

In some embodiments, said apparatus comprises a user equipment.

According to various, but not necessarily all, example embodiments of the disclosure there is provided a method performed at an apparatus comprising: operating in a mode where the apparatus is communicating with a first and second node using different radio access technologies RAT; receiving conditional handover information from said first node, said conditional handover information comprising configuration information for said second node and a core network indication indicating whether said first and second nodes provide access to one of the following: a same core network, different core networks that are compatible with each other, or different core networks that are incompatible with each other; determining whether at least one handover condition is fulfilled; and where so performing a handover such that said apparatus is no longer connected to said first node and said apparatus is connected to said second node.

In some embodiments, said mode comprises a dual connectivity mode, said first node acting as an anchor node for said apparatus and said second node acting as a secondary node; and following said handover said second node acting as said anchor node for said apparatus.

In other embodiments, said apparatus is configured for operation with a plurality of SIMs, a first SIM for communicating with a first radio access technology of said first node and a second SIM for communicating with a second radio access technology of said second node.

In some embodiments where said apparatus is configured to operate with a plurality of SIMs, said method comprises: generating a report indicating said apparatus is connected to both said first and second node; and transmitting said report to said first node.

In some embodiments, said method comprises: receiving core network indication indicating said core network is a same or compatible core network for said first and second nodes, and applying user plane data routing procedures according to said configuration information received within said conditional handover information from said first node.

In some embodiments, said method comprises deriving security keys for said second node from said conditional handover information and said core network indication received from said first node.

In some embodiments, said method comprises receiving configuration information indicating said synchronisation information and timing advance are to be re-used, and retaining said synchronisation and timing advance configuration when performing said handover to said second node.

In some embodiments, said method comprises determining whether said at least one handover condition is fulfilled by determining at least one of the following: whether uplink control signalling to said first node has triggered more than a predetermined number of retransmissions; whether a measured signal strength of signals from said first node is below a configured threshold value; whether a measured signal from said first node is below a configured threshold for a predetermined time; and whether an error rate in layer 1 or layer 2 signalling to said first node is above a predetermined threshold over a predetermined time.

In some embodiments, said step of performing said handover comprises applying user plane data routing procedures according to said configuration information received within said conditional handover information from said first node.

In some embodiments, said method comprises generating a handover confirmation report for transmission to said second node, said handover confirmation report indicating that said apparatus is no longer also connected to said first node and comprising an identifier for said user equipment.

In some embodiments, said method comprises: generating a handover confirmation report for transmission to said second node, said handover confirmation report comprising an indication of said at least one handover condition that triggered said handover.

According to various, but not necessarily all, example embodiments of the disclosure there is provided an apparatus comprising: means for communicating with a first and second node using different radio access technologies RAT; means for receiving conditional handover information from said first node, said conditional handover information comprising configuration information for said second node and a core network indication indicating whether said first and second nodes provide access to one of the following: a same core network, different core networks that are compatible with each other, or different core networks that are incompatible with each other; means for determining whether at least one handover condition is fulfilled; and where so triggering means for performing a handover to perform said handover such that said apparatus is no longer connected to said first node and said apparatus is connected to said second node.

The apparatus may comprise further means for performing the optional features set out in relation to the method mentioned above.

According to various, but not necessarily all, example embodiments of the disclosure there is provided an apparatus comprising: circuitry configured to communicate with a first and second node using different radio access technologies RAT; circuitry configured to receive conditional handover information from said first node, said conditional handover information comprising configuration information for said second node and a core network indication indicating whether said first and second nodes provide access to one of the following: a same core network, different core networks that are compatible with each other, or different core networks that are incompatible with each other; circuitry configured to determine whether at least one handover condition is fulfilled; and where so triggering circuitry configured to perform a handover to perform said handover such that said apparatus is no longer connected to said first node and said apparatus is connected to said second node.

The apparatus may comprise further circuitry configured to perform the optional features set out in relation to the method mentioned above.

According to various, but not necessarily all, example embodiments of the disclosure there is provided a computer program comprising instructions which, when executed by an apparatus, cause the apparatus to perform at least the following:
operate in a mode such that said apparatus is communicating with a first and second node using different radio access technologies RAT, in response to receipt of conditional handover information from said first node, said conditional handover information comprising configuration information for said second node and a core network indication indicating whether said first and second nodes provide access to one of the following: a same core network, different core networks that are compatible with each other, or different core networks that are incompatible with each other;
determine whether at least one handover condition is fulfilled; and where so perform a handover such that said apparatus is no longer connected to said first node and said apparatus is connected to said second node.

According to various, but not necessarily all, example embodiments of the disclosure there is provided a computer readable medium comprising instructions which, when executed by an apparatus, cause the apparatus to perform at least the following: operate in a mode such that said apparatus is communicating with a first and second node using different radio access technologies RAT, in response to receipt of conditional handover information from said first node, said conditional handover information comprising configuration information for said second node and a core network indication indicating whether said first and second nodes provide access to one of the following: a same core network, different core networks that are compatible with each other, or different core networks that are incompatible with each other; determine whether at least one handover condition is fulfilled; and where so perform a handover such that said apparatus is no longer connected to said first node and said apparatus is connected to said second node.

According to various, but not necessarily all, example embodiments of the disclosure there is provided a non-transitory computer readable medium comprising program instructions stored thereon for performing at least the following: causing an apparatus to operate in a mode such that said apparatus is communicating with a first and second node using different radio access technologies RAT, in response to receipt of conditional handover information from said first node, said conditional handover information comprising configuration information for said second node and a core network indication indicating whether said first and second nodes provide access to one of the following: a same core network, different core networks that are compatible with each other, or different core networks that are incompatible with each other; cause said apparatus to determine whether at least one handover condition is fulfilled; and where so cause said apparatus to perform a handover such that said apparatus is no longer connected to said first node and said apparatus is connected to said second node.

The instructions detailed above may be for causing the performing of the optional features set out in relation to the method mentioned above.

According to various, but not necessarily all, example embodiments of the disclosure there is provided an apparatus for providing radio coverage to a user equipment, according to a first radio access technology, said apparatus comprising:
at least one processor; and at least one memory storing instructions that when executed by the at least one processor cause the apparatus at least to perform:
providing said radio coverage within a radio cell to a user equipment; determining that said user equipment is also communicating with a second node using a second radio access technology; and generating a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

The user equipment behaviour will depend on whether the core networks are compatible or not. Thus, there will be a core network indicator to provide an indication as to whether the core networks are compatible or incompatible. In some cases the core networks may be the same core network in which case they will be compatible.

In some embodiments, said apparatus is caused to provide said radio coverage as an anchor node to said user equipment, said second node providing radio coverage as a secondary node.

In some embodiments, said apparatus is further caused to generate a message for transmission to said second node, said message comprising configuration information for communicating with said user-equipment.

In some embodiments, said message for transmission to said second node comprises an inter-RAT conditional handover request.

In some embodiments, said apparatus is further caused to receive conditional handover information comprising said configuration information from said second node.

In some embodiments, said message comprises information relevant for generating security keys for said user equipment to communicate with said second node.

Where the indication indicates that core networks are the same or are compatible the security key information may be an indication of how to derive the security keys from information received.

In some embodiments, where said first and second node are co-located said received configuration information comprises an indication that said timing advance and synchronisation information are to be retained and do not need to be updated.

In some embodiments, where said first and second node are not co-located said received configuration information comprises an indication that timing advance needs to be acquired or an indication of a value to apply for said timing advance to be used by said user equipment for communication with said second node.

In some embodiments, said message for transmission to said second node further comprises an identifier identifying said user equipment.

In some embodiments, said apparatus comprises a 6G base station.

According to various, but not necessarily all, example embodiments of the disclosure there is provided a method for providing radio coverage to a user equipment, according to a first radio access technology, said method comprising: providing said radio coverage within a radio cell to a user equipment; determining that said user equipment is also communicating with a second node using a second radio access technology; and generating a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

In some embodiments, said method comprises providing said radio coverage as an anchor node to said user equipment, said second node providing radio coverage as a secondary node.

In some embodiments, said method comprises generating a message for transmission to said second node, said message comprising configuration information for communicating with said user-equipment.

In some embodiments, said message for transmission to said second node comprises an inter-RAT conditional handover request.

In some embodiments, said method comprises receiving conditional handover information comprising said configuration information from said second node.

According to various, but not necessarily all, example embodiments of the disclosure there is provided an apparatus comprising: means for providing radio coverage to a user equipment, according to a first radio access technology, said apparatus comprising: means for providing said radio coverage within a radio cell to a user equipment; means for determining that said user equipment is also communicating with a second node using a second radio access technology; and means for generating a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

The apparatus may comprise further means for performing the optional features set out in relation to the method mentioned above.

According to various, but not necessarily all, example embodiments of the disclosure there is provided an apparatus comprising circuitry configured to provide radio coverage to a user equipment, according to a first radio access technology, said apparatus comprising: circuitry configured to provide said radio coverage within a radio cell to a user equipment; circuitry configured to determine that said user equipment is also communicating with a second node using a second radio access technology; and circuitry configured to generate a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

The apparatus may comprise further circuitry configured to perform the optional features set out in relation to the method mentioned above.

According to various, but not necessarily all, example embodiments of the disclosure there is provided a computer program comprising instructions which, when executed by an apparatus, cause the apparatus to perform at least the following:
providing radio coverage within a radio cell to a user equipment; determining that said user equipment is also communicating with a second node using a second radio access technology; and generating a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

According to various, but not necessarily all, example embodiments of the disclosure there is provided a computer readable medium comprising instructions which, when executed by an apparatus, cause the apparatus to perform at least the following: providing radio coverage within a radio cell to a user equipment; determining that said user equipment is also communicating with a second node using a second radio access technology; and generating a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

According to various, but not necessarily all, example embodiments of the disclosure there is provided a non-transitory computer readable medium comprising program instructions stored thereon for performing at least the following: cause an apparatus to provide radio coverage within a radio cell to a user equipment; determine that said user equipment is also communicating with a second node using a second radio access technology; and generate a message for transmission to said user equipment said message comprising conditional handover information said conditional handover information comprising configuration information for communicating with said second node and a core network indication indicating whether said first and second nodes provide access to one of the following: a same core network, different core networks that are compatible with each other, or different core networks that are incompatible with each other.

The instructions detailed above may be for causing the performing of the optional features set out in relation to the method mentioned above.

According to various, but not necessarily all, example embodiments of the disclosure there is provided an apparatus for providing radio coverage to a user equipment according to a second radio access technology, said apparatus comprising: at least one processor; and at least one memory storing instructions that when executed by the at least one processor cause the apparatus at least to perform: provide said radio coverage within a radio cell to a user equipment, said user equipment communicating with a first node, using a first radio access technology; receive from said first node a conditional handover request message comprising configuration information for said user equipment; determine that a conditional handover from a first radio access technology is currently allowed; and where so derive updated configuration information for communication between said user equipment and said second node from said configuration information; and transmit said updated configuration information to said first node.

A conditional handover is allowed where it is supported by the base station and the base station currently has sufficient resources to provide the handover.

In some embodiments, said apparatus is operating as a secondary node and said first node is operating as an anchor node.

In some embodiments, said configuration information comprises information relevant for generating security keys for communication with said user equipment.

Where the core networks are the same or are compatible the security key information may comprise information allowing the security keys to de derived therefrom. For example, it may comprise an indication of a root key and/or an indication to reuse keys and a way to derive an updated key from the root key or it may comprise SIM information for a multi-SIM embodiment which information also allows the security keys to be derived.

In some embodiments, said updated configuration information comprises information relevant for generating security keys for communication with said user equipment.

Th apparatus may provide information as to how a user equipment may derive security keys and this may be based on the security key information it has received from the second node.

In some embodiments said updated configuration information comprises an indication that timing and synchronisation information are to be retained.

In other embodiments, said apparatus is caused to generate a response to said conditional handover request message said response including timing and synchronisation information; and to transmit said response to said first node.

In some embodiments, said conditional handover request message comprises an inter-RAT conditional handover request message.

In some embodiments said apparatus is further caused to: in response to receive an inter-RAT conditional handover confirmation message from a user equipment, said inter-RAT conditional handover confirmation message comprising confirmation that said user equipment is no longer connected to said first node; and to derive and apply updated security keys in dependence upon configuration information received in said conditional handover request message.

In some embodiments said apparatus is further caused to: in response to receiving an inter-RAT conditional handover confirmation message from a user equipment said inter-RAT conditional handover confirmation message comprising confirmation that said user equipment is no longer connected to said first node; switch to act as an anchor node.

In some embodiments said apparatus is further caused to: in response to receiving an inter-RAT conditional handover confirmation message from a user equipment said inter-RAT conditional handover confirmation message comprising an indication of said at least one radio condition triggering said connection change; to forward said indication of said at least one radio condition triggering said connection change to said first node.

In some embodiments said apparatus comprises a 5G base station.

According to various, but not necessarily all, example embodiments of the disclosure there is provided a method for providing radio coverage to a user equipment according to a second radio access technology, said method comprising: providing said radio coverage within a radio cell to a user equipment, said user equipment communicating with a first node using a first radio access technology; receiving from said first node a conditional handover request message comprising configuration information for said user equipment; determining that a conditional handover from a first radio access technology is currently allowed; and where so deriving updated configuration information for communication between said user equipment and said second node from said configuration information; and transmitting said updated configuration information to said first node.

In some embodiments said updated configuration information comprises an indication that timing and synchronisation information are to be retained.

In other embodiments, said method comprises generating a response to said conditional handover request message said response including and indication of at least one of the following: an indication that timing advance needs to be acquired or an indication of a value to apply for said timing advance.

In some embodiments said method comprises: receiving an inter-RAT conditional handover confirmation message from a user equipment, said inter-RAT conditional handover confirmation message comprising confirmation that said user equipment is no longer connected to said first node; and deriving and applying updated security keys in dependence upon configuration information received in said conditional handover request message.

In some embodiments said method comprises: receiving an inter-RAT conditional handover confirmation message from a user equipment said inter-RAT conditional handover confirmation message comprising confirmation that said user equipment is no longer connected to said first node; and switching to act as an anchor node.

In some embodiments said method comprises: receiving an inter-RAT conditional handover confirmation message from a user equipment said inter-RAT conditional handover confirmation message comprising an indication of said at least one radio condition triggering said connection change; and forwarding said indication of said at least one radio condition triggering said connection change to said first node.

According to various, but not necessarily all, example embodiments of the disclosure there is provided an apparatus for providing radio coverage to a user equipment according to a second radio access technology, said apparatus comprising: means for providing said radio coverage within a radio cell to a user equipment, said user equipment communicating with a first node using a first radio access technology; means for receiving from said first node a conditional handover request message comprising configuration information for said user equipment; means for determining that a conditional handover from a first radio access technology is currently allowed; means for deriving updated configuration information for communication between said user equipment and said second node from said configuration information; and means for transmitting said updated configuration information to said first node.

The apparatus may comprise further means for performing the optional features set out in relation to the method mentioned above.

According to various, but not necessarily all, example embodiments of the disclosure there is provided an apparatus comprising circuitry configured to provide radio coverage to a user equipment according to a second radio access technology, said apparatus comprising: circuitry configured to provide said radio coverage within a radio cell to a user equipment, said user equipment communicating with a first node using a first radio access technology; circuitry configured to receive from said first node a conditional handover request message comprising configuration information for said user equipment; circuitry configured to determine that a conditional handover from a first radio access technology is currently allowed; circuitry configured to derive updated configuration information for communication between said user equipment and said second node from said configuration information; and circuitry configured to transmit said updated configuration information to said first node.

The apparatus may comprise further circuitry configured to perform the optional features set out in relation to the method mentioned above.

According to various, but not necessarily all, example embodiments of the disclosure there is provided a computer program comprising instructions which, when executed by an apparatus, cause the apparatus to perform at least the following:
providing radio coverage to a user equipment according to a second radio access technology within a radio cell, said user equipment communicating with a first node using a first radio access technology; receiving from said first node a conditional handover request message comprising configuration information for said user equipment; determining that a conditional handover from a first radio access technology is currently allowed; and where so deriving updated configuration information for communication between said user equipment and said second node from said configuration information; and transmitting said updated configuration information to said first node.

According to various, but not necessarily all, example embodiments of the disclosure there is provided a computer readable medium comprising instructions which, when executed by an apparatus, cause the apparatus to perform at least the following: providing radio coverage to a user equipment according to a second radio access technology within a radio cell, said user equipment communicating with a first node using a first radio access technology; receiving from said first node a conditional handover request message comprising configuration information for said user equipment; determining that a conditional handover from a first radio access technology is currently allowed; and where so deriving updated configuration information for communication between said user equipment and said second node from said configuration information; and transmitting said updated configuration information to said first node.

According to various, but not necessarily all, example embodiments of the disclosure there is provided a non-transitory computer readable medium comprising program instructions stored thereon for performing at least the following: cause an apparatus to provide radio coverage to a user equipment according to a second radio access technology within a radio cell, said user equipment communicating with a first node using a first radio access technology; receiving from said first node a conditional handover request message comprising configuration information for said user equipment; determine that a conditional handover from a first radio access technology is currently allowed; and where so derive updated configuration information for communication between said user equipment and said second node from said configuration information; and transmit said updated configuration information to said first node.

The instructions detailed above may be for causing the performing of the optional features set out in relation to the method mentioned above.

According to various, but not necessarily all, example embodiments of the disclosure there is provided an apparatus comprising at least one processor; and at least one memory storing instructions that when executed by the at least one processor cause the apparatus at least to: operate in a mode such that said apparatus is communicating with a first and second node using different radio access technologies RAT, in response to receipt of conditional handover information (5) from said first node, said conditional handover information comprising configuration information for said second node and a core network indication as to whether said first and second node provide access to one of the following: a same core network, or different core networks that are compatible with each other, or different core networks that are incompatible with each other; determining whether at least one handover condition is fulfilled; and when so initiating a handover process by: generating a handover confirmation report comprising an indication of said at least one handover condition that was determined to be fulfilled; transmitting said report to said second node; and performing said handover such that said apparatus is no longer connected to said first node and said apparatus is connected to said second node.

The apparatus determines whether handover conditions are fulfilled and triggers a conditional handover between cells provided by nodes operating using different RATs. The apparatus generates a handover confirmation report which includes information regarding the condition that triggered the handover.

In some embodiments, said mode said apparatus is caused to operate in comprises a dual connectivity mode, said first node acting as an anchor node for said apparatus and said second node acting as a secondary node; and following said handover said second node acts as said anchor node for said apparatus.

In other embodiments, said apparatus is configured to operate with a plurality of SIMs, a first for communicating with a first radio access technology of said first node and a second for communicating with a second radio access technology of said second node.

In some embodiments where said apparatus is configured to operate with a plurality of SIM cards, said apparatus is further caused to: generate a message indicating said apparatus is connected to both said first and second node; and to transmit said message to said first node.

In some embodiments, said first node operates at a higher frequency band than said second node and thus, may provide cells with a smaller area of radio coverage than cells of said second node and the apparatus may be more likely to lose connection with the first node before it loses connection with the second node.

Said first node may comprise a 6G node and said second node may comprise a 5G node.

In some embodiments, said apparatus is caused to: in response to said received core network indication indicating said core network for said first and second nodes is a same or compatible core network, to apply user plane data routing procedures according to said configuration information received within said conditional handover information from said first node

In some embodiments, said apparatus is caused to determine from said core network indication if said core network is a same or a compatible core network and if so to derive security keys for said second node from said conditional handover information; and if not to generate new security keys.

In some embodiments, in response to said received configuration information indicating said synchronisation information and timing advance are to be re-used, said apparatus is caused to retain said synchronisation and timing advance configuration when performing said handover to said second node.

In some embodiments, determining whether said handover condition is fulfilled comprises determining whether at least one radio condition for communicating with said first node does not meet at least one predetermined threshold.

In some embodiments, said at least one handover condition is fulfilled when:
a number of uplink retransmissions is above a configured maximum retransmission value.

In some embodiments, said at least one handover condition is fulfilled when:
said number of uplink retransmissions is below a configured maximum retransmission value; and at least one uplink dummy transmission is performed and fails.

In some embodiments, said at least one handover condition is fulfilled when:
a measured signal strength of signals from said first node is below a configured threshold value.

In some embodiments, said at least one handover condition is fulfilled when:
a packet error rate in layer 1 or layer 2 signalling to said first node over a predetermined time is above a configured threshold value.

In some embodiments, said apparatus is caused to perform determining that at least two of said handover conditions are fulfilled prior to initiating said handover process.

In some embodiments, said determining whether said at least one handover condition is fulfilled comprises: comparing a packet error rate in layer 1 or layer 2 signalling to said first node over a predetermined time to a configured threshold value, and where said packet error rate is above said predetermined threshold value: comparing a number of uplink retransmissions to a configured threshold value; and where said number of uplink retransmissions is above said configured threshold value determining said handover condition to be fulfilled.

In some cases, in addition to determining the packet error rate to be higher than a predetermined amount, uplink retransmissions may also be checked and only where both meet threshold values are the handover conditions fulfilled.

In some embodiments, said determining whether said at least one handover conditions is fulfilled comprises: comparing a packet error rate in layer 1 or layer 2 signalling to said first node over a predetermined time to a configured threshold value, where said packet error rate is above said predetermined threshold value: comparing a number of uplink retransmissions to a configured threshold value; and where said number of retransmissions is above said configured threshold value determining said handover condition to be fulfilled; and where not performing at least one additional uplink dummy transmission; and determining said at least one handover condition to be fulfilled where said at least one uplink dummy transmission fails.

In some embodiments, in addition to determining the packet error rate to be higher than a predetermined amount, and the uplink retransmissions to be above a certain amount, where the uplink retransmissions are not higher than this amount, then they may be checked by sending uplink dummy data and where this fails then the handover condition may be considered to be met. This may be required where the apparatus is not currently transmitting uplink signals regularly, and thus, there may be no transmissions to fail despite the radio conditions being poor.

In some embodiments, said apparatus is caused to update at least one of said handover conditions in response to determining that said apparatus has disconnected from said first node and then reconnected to said first node more than a predetermined number of times within a predetermined time period.

In some embodiments the apparatus may check whether it has ping ponged between the cells, that is switched from one cell and then back again within a short period of time, and where so this is an indication that the apparatus may be switching cells too early and the apparatus may adjust the threshold conditions to make them more demanding and thus make handovers less frequent in order to reduce the number of these ping pongs.

In some embodiments, said apparatus is caused to provide an indication of said updated at least one handover condition within said handover confirmation report.

In some embodiments, said apparatus is further caused to determine a mobility of said apparatus and where said mobility is low to delay initiating performing said handover process.

The mobility of the apparatus is deemed to be low when it is stationary for example.

In some embodiments, said step of performing said handover comprises applying user plane data routing procedures according to said configuration information received within said conditional handover information from said first node.

In some embodiments, said apparatus comprises a user equipment.

According to various, but not necessarily all, example embodiments of the disclosure there is provided a method performed on an apparatus said method comprising: operating in a mode such that said apparatus is communicating with a first and second node using different radio access technologies RAT, receiving conditional handover information from said first node, said conditional handover information comprising configuration information for said second node and a core network indication as to whether said first and second node provide access to one of the following: a same core network, or different core networks that are compatible with each other, or different core networks that are incompatible with each other; determining whether at least one handover condition is fulfilled; and when so initiating a handover process by: generating a handover confirmation report comprising an indication of said at least one handover condition that was determined to be fulfilled; transmitting said report to said second node; and performing said handover such that said apparatus is no longer connected to said first node and said apparatus is connected to said second node.

In some embodiments where said apparatus operates with a plurality of SIM cards, said method comprises: generating a message indicating said apparatus is connected to both said first and second node; and transmitting said message to said first node.

In some embodiments, said method comprises where said core network indication indicates said core network for said first and second nodes is a same or compatible core network, applying user plane data routing procedures according to said configuration information received within said conditional handover information from said first node.

In some embodiments, said method comprises determining from said core network indication if said core network is a same or a compatible core network and where so deriving security keys for said second node from said conditional handover information; and where not generating new security keys.

In some embodiments, in response to said received configuration information indicating said synchronisation information and timing advance are to be re-used, said method comprises retaining said synchronisation and timing advance configuration when performing said handover to said second node.

In some embodiments, determining whether said handover condition is fulfilled comprises determining whether at least one radio condition for communicating with said first node does not meet at least one predetermined threshold.

In some embodiments, said method comprises determining that at least two of said handover conditions are fulfilled prior to initiating said handover process.

In some embodiments, said determining whether said at least one handover condition is fulfilled comprises: comparing a packet error rate in layer 1 or layer 2 signalling to said first node over a predetermined time to a configured threshold value, and where said packet error rate is above said predetermined threshold value: comparing a number of uplink retransmissions to a configured threshold value; and where said number of uplink retransmissions is above said configured threshold value determining said handover condition to be fulfilled.

In some embodiments, said determining whether said at least one handover conditions is fulfilled comprises: comparing a packet error rate in layer 1 or layer 2 signalling to said first node over a predetermined time to a configured threshold value, where said packet error rate is above said predetermined threshold value: comparing a number of uplink retransmissions to a configured threshold value; and where said number of retransmissions is above said configured threshold value determining said handover condition to be fulfilled; and where not performing at least one additional uplink dummy transmission; and determining said at least one handover condition to be fulfilled where said at least one uplink dummy transmission fails.

In some embodiments, said method comprises updating at least one of said handover conditions in response to determining that said apparatus has disconnected from said first node and then reconnected to said first node more than a predetermined number of times within a predetermined time period.

In some embodiments, said method comprises providing an indication of said updated at least one handover condition within said handover confirmation report.

In some embodiments, said method comprises determining a mobility of said apparatus and where said mobility is low delaying initiating performing said handover process.

In some embodiments, said step of performing said handover comprises applying user plane data routing procedures according to said configuration information received within said conditional handover information from said first node.

According to various, but not necessarily all, example embodiments of the disclosure there is provided an apparatus comprising: means for operating in a mode such that said apparatus is communicating with a first and second node using different radio access technologies RAT; means for receiving conditional handover information from said first node, said conditional handover information comprising configuration information for said second node and a core network indication as to whether said first and second node provide access to one of the following: a same core network, or different core networks that are compatible with each other, or different core networks that are incompatible with each other; means for determining whether at least one handover condition is fulfilled; and when so initiating a handover process by: triggering operation of: means for generating a handover confirmation report comprising an indication of said at least one handover condition that was determined to be fulfilled; means for transmitting said report to said second node; and means for performing said handover such that said apparatus is no longer connected to said first node and said apparatus is connected to said second node.

The apparatus may comprise further means for performing the optional features set out in relation to the method mentioned above.

According to various, but not necessarily all, example embodiments of the disclosure there is provided an apparatus comprising circuitry configured to operate in a mode such that said apparatus is communicating with a first and second node using different radio access technologies RAT; circuitry configured to receive conditional handover information from said first node, said conditional handover information comprising configuration information for said second node and a core network indication as to whether said first and second node provide access to one of the following: a same core network, or different core networks that are compatible with each other, or different core networks that are incompatible with each other; circuitry configured to determine whether at least one handover condition is fulfilled and when so initiating a handover process by triggering operation of: circuitry configured to generate a handover confirmation report comprising an indication of said at least one handover condition that was determined to be fulfilled; circuitry configured to transmit said report to said second node; and circuitry configured to perform said handover such that said apparatus is no longer connected to said first node and said apparatus is connected to said second node.

The apparatus may comprise further circuitry configured to perform the optional features set out in relation to the method mentioned above.

According to various, but not necessarily all, example embodiments of the disclosure there is provided a computer program comprising instructions which, when executed by an apparatus, cause the apparatus to perform at least the following:
operate in a mode such that said apparatus is communicating with a first and second node using different radio access technologies RAT, receive conditional handover information from said first node, said conditional handover information comprising configuration information for said second node and a core network indication as to whether said first and second node provide access to one of the following: a same core network, or different core networks that are compatible with each other, or different core networks that are incompatible with each other; determine whether at least one handover condition is fulfilled; and when so initiate a handover process by: generating a handover confirmation report comprising an indication of said at least one handover condition that was determined to be fulfilled; transmitting said report to said second node; and performing said handover such that said apparatus is no longer connected to said first node and said apparatus is connected to said second node.

According to various, but not necessarily all, example embodiments of the disclosure there is provided a computer readable medium comprising instructions which, when executed by an apparatus, cause the apparatus to perform at least the following: operate in a mode such that said apparatus is communicating with a first and second node using different radio access technologies RAT, receive conditional handover information from said first node, said conditional handover information comprising configuration information for said second node and a core network indication as to whether said first and second node provide access to one of the following: a same core network, or different core networks that are compatible with each other, or different core networks that are incompatible with each other; determine whether at least one handover condition is fulfilled; and when so initiate a handover process by: generating a handover confirmation report comprising an indication of said at least one handover condition that was determined to be fulfilled; transmitting said report to said second node; and performing said handover such that said apparatus is no longer connected to said first node and said apparatus is connected to said second node.

According to various, but not necessarily all, example embodiments of the disclosure there is provided a non-transitory computer readable medium comprising program instructions stored thereon for performing at least the following: cause an apparatus to operate in a mode such that said apparatus is communicating with a first and second node using different radio access technologies RAT, receive conditional handover information from said first node, said conditional handover information comprising configuration information for said second node and a core network indication as to whether said first and second node provide access to one of the following: a same core network, or different core networks that are compatible with each other, or different core networks that are incompatible with each other; determine whether at least one handover condition is fulfilled; and when so initiate a handover process by: generating a handover confirmation report comprising an indication of said at least one handover condition that was determined to be fulfilled; transmitting said report to said second node; and performing said handover such that said apparatus is no longer connected to said first node and said apparatus is connected to said second node.

The instructions detailed above may be for causing the performing of the optional features set out in relation to the method mentioned above.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The ordering of method steps set out above may not be critical or fixed and the exact ordering of the steps may be varied as appropriate.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus (10) comprising:
at least one processor; and
at least one memory storing instructions that when executed by the at least one processor cause the apparatus at least to:
operate in a mode such that said apparatus is communicating with a first and second node using different radio access technologies RAT;
in response to receipt of conditional handover information from said first node (20), said conditional handover information comprising configuration information for said second node (22) and a core network indication as to whether said first and second node provide access to one of the following: a same core network, or different core networks that are compatible with each other, or different core networks that are incompatible with each other;
determining whether at least one handover condition is fulfilled; and when so initiating a handover process by:
generating a handover confirmation report comprising an indication of said at least one handover condition that was determined to be fulfilled;
transmitting said report to said second node; and
performing said handover such that said apparatus (10) is no longer connected to said first node (20) and said apparatus is connected to said second node (22).

2. An apparatus according to claim 1, wherein said mode said apparatus is caused to operate in comprises a dual connectivity mode, said first node acting as an anchor node for said apparatus and said second node acting as a secondary node; and
following said handover said second node acts as said anchor node for said apparatus.

3. An apparatus according to claim 1, wherein said apparatus is configured to operate with a plurality of SIMs, a first for communicating with a first radio access technology of said first node and a second for communicating with a second radio access technology of said second node.

4. An apparatus according to any preceding claim, said apparatus being caused to:
in response to said received core network indication indicating said core network for said first and second nodes is a same or compatible core network, to apply user plane data routing procedures according to said configuration information received within said conditional handover information from said first node.

5. An apparatus according to any preceding claim, said apparatus being caused to determine from said core network indication if said core network is a same or compatible core network and if so to derive security keys for said second node from said conditional handover information; and if not to generate new security keys.

6. An apparatus according to any preceding claim, wherein in response to said received configuration information indicating said synchronisation information and timing advance are to be re-used, said apparatus is caused to retain said synchronisation and timing advance configuration when performing said handover to said second node.

7. An apparatus according to any preceding claim, wherein said determining whether said at least one handover condition is fulfilled comprises:
comparing at least one property dependent on uplink or downlink radio conditions for communicating with said first node with at least one predetermined threshold.

8. An apparatus according to any preceding claim, wherein said at least one handover condition is fulfilled when:
a number of uplink retransmissions is above a configured maximum retransmission value.

9. An apparatus according to any one of claims 1 to 7, wherein said at least one handover condition is fulfilled when:
said number of uplink retransmissions is below a configured maximum retransmission value; and
at least one uplink dummy transmission is performed and fails.

10. An apparatus according to any preceding claim, wherein said at least one handover condition is fulfilled when at least one of the following conditions is met:
a measured signal strength of signals from said first node is below a configured threshold value; and
a packet error rate in layer 1 or layer 2 signalling to said first node over a predetermined time is above a configured threshold value.

11. An apparatus according to any one of claims 8 to 10, wherein said apparatus is caused to perform determining that at least two of said handover conditions are fulfilled prior to initiating said handover process.

12. An apparatus according to any preceding claim, said apparatus being caused to update at least one of said at least one handover condition in response to determining that said apparatus has disconnected from said first node and then reconnected to said first node more than a predetermined number of times within a predetermined time period.

13. An apparatus according to claim 12, said apparatus being caused to provide an indication of said updated at least one handover condition within said handover confirmation report.

14. An apparatus according to any one of claims 7 to 13, said apparatus being further caused to determine a mobility of said apparatus and where said mobility is low to delay initiating performing said handover process.

15. A method performed on an apparatus, said method comprising:
operating in a mode such that said apparatus is communicating with a first and second node using different radio access technologies RAT;
receiving conditional handover information from said first node, said conditional handover information comprising configuration information for said second node and a core network indication as to whether said first and second node provide access to one of the following: a same core network, or different core networks that are compatible with each other, or different core networks that are incompatible with each other;
determining whether at least one handover condition is fulfilled; and when so
initiating a handover process by:
generating a handover confirmation report comprising an indication of said at least one handover condition that was determined to be fulfilled;
transmitting said report to said second node; and
performing said handover such that said apparatus is no longer connected to said first node and said apparatus is connected to said second node.
